Europäisches Patentamt

European Patent Office

Office européen des brevets

(19)

(11) Publication number: **0 038 624**
A1

(12) **EUROPEAN PATENT APPLICATION**

(21) Application number: 81301134.3

(51) Int. Cl.³: **H 02 M 7/537**

(22) Date of filing: 18.03.81

(30) Priority: 23.04.80 GB 8013365

(43) Date of publication of application:
28.10.81 Bulletin 81/43

(84) Designated Contracting States:
CH DE FR IT LI NL SE

(71) Applicant: THE MARCONI COMPANY LIMITED
Marconi House New Street
Chelmsford Essex CM1 1PL(GB)

(72) Inventor: Baines, George William
24, Kings Drive
Leicester Forest East Leicester(GB)

(74) Representative: Rouse, David George
Marconi House New Street
Chelmsford Essex CM1 1PL(GB)

(54) Improvements in or relating to transistor inverter arrangements.

(57) The invention provides an inverter using field effect transistors (F.E.T.'s). One load terminal is connected via a first F.E.T. to a positive supply terminal and via a second F.E.T. to a negative supply terminal. The other load terminal is connected via a third F.E.T. to the positive supply terminal and via a fourth F.E.T. to the negative supply terminal. A first control switching waveform is applied to the gate electrode of the second F.E.T. and, via polarity inverting means, to the gate electrode of the first F.E.T. A second control switching waveform is applied to the gate electrode of the fourth F.E.T. and, via polarity inverting means, to the gate electrode of the third F.E.T , whereby as the first and fourth F.E.T.'s are switched off said second and third F.E.T.'s respectively are switched on, and vice versa. Means are provided for biasing the first and third F.E.T.'s positively with respect to the positive supply terminal when the respective F.E.T. is in a conducting condition.

EP 0 038 624 A1

FIG. 2.

Improvements in or relating to transistor inverter arrangements

This invention relates to transistor inverter arrangements.

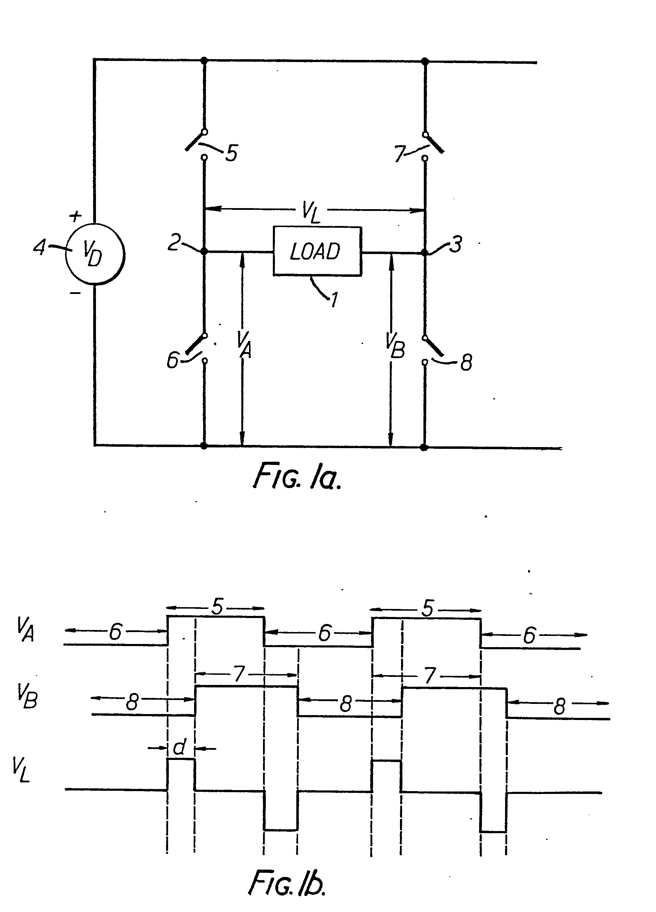

The essential elements of a transistor inverter arrangement are shown in the circuit diagram of Figure 1.a. of the accompanying drawings. Figure 1.b. is an explanatory voltage waveform diagram.

Referring to Figure 1, the load of the inverter arrangement is shown at 1 with two points of connection referenced 2 and 3. A d.c. voltage supply is represented at 4, polarised as indicated. Connection point 2 of the load 1 is arranged to be capable of being connected to the positive side of source 4 via a transistor switch 5 or to the negative side of the source 4 by a transistor switch 6. Similarly, connection point 3 of the load 1 is arranged to be connected to the positive side of the source 4 by a switch 7 or to the negative side of the source 4 by a switch 8.

The voltage across switch 6 is represented as $V_A$ whilst the voltage across switch 8 is represented as $V_B$ and the voltage across the load is represented by $V_L$.

Switches 5 and 6 are arranged to be operated in unison so that when switch 5 is closed (i.e. rendered conductive) switch 6 is open (i.e. rendered non-conductive) and vice versa. Switches 5 and 6 are controlled in accordance with a square wave function so that voltage $V_A$ has a waveform as shown at $V_A$ in Figure 1.b. The numbers associated with the different portions of the waveform $V_A$ in Figure 1.b. indicate times when switches 5 or 6 are closed.

Switches 7 and 8 are also arranged to operate in unison so that when switch 7 is closed switch 8 is open and vice versa. Switches 7 and 8 are also controlled by a square wave function so that voltage $V_B$ follows the waveform $V_B$ in Figure 1.b. Again the numbers associated with the different parts of the waveform $V_B$ indicate which of the switches 7 and 8 are closed. Each of the square waves

$V_A$ and $V_B$ has a mean d.c. level of half of the supply voltage $V_{d.c.}$

It will be seen that the waveform $V_A$ leads waveform $V_B$ by a small time interval producing a phase difference D. The resultant voltage $V_L$ across the load 1 will be as shown in waveform $V_L$ in Figure 1.b. As will be appreciated if the phase difference between the waveforms $V_A$ and $V_B$ is altered so will be the "mark to space" ratio of the waveform $V_L$ and hence the voltage made available to the load.

As at present known, so called bi-polar, transistorised, high voltage inverter arrangements have normally used a transformer (not shown in Figure 1) to provide drive for the transistors 5 and 7 which are connected to the positive side of the supply source 4. The reason for this is that high voltage, bi-polar, power transistors are predominantly of the npn type in which the control is referred to the emitter, i.e. the more negative of the power connections. Hence controls can be referred to the negative side of the supply 4 and control directly the power transistors 6 and 8 connected thereto.but transistors 5 and 7 require transformed drive signals.

The use of transformers to drive the transistors 5 and 7 connected to the positive side of the source 4 is undesirable.

Furthermore, bi-polar transistors tends to be somewhat imperfect switches in that they do not turn off immediately the control current is removed. Hence it is usual in known arrangements to provide a delay between the switching off of the control current of one bi-polar transistor switch and the turning on of its complement so as to avoid a large destructive current which would otherwise pass through both devices from the supply.

The present invention seeks to provide an improved transistor inverter arrangement in which one or more of the above difficulties is reduced.

According to this invention a transistor inverter arrangement comprises two load terminals one of which is connected via a first field effect transistor (F.E.T.) to a positive supply terminal and via a second field effect transistor to a negative supply terminal and the other of which load terminals is connected via a third field effect transistor to said positive supply terminal and via a fourth field effect transistor to said negative supply terminal and wherein there is provided means for applying a first control switching waveform to the gate electrode of said second field effect transistor and, via polarity inverting means, the gate electrode of said first field effect transistor and means for applying a second control switching waveform to the gate electrode of said fourth field effect transistor and, via polarity inverting means, to the gate electrode of said third field effect transistor, whereby as said first and fourth field effect transistors are switched off said second and third field effect transistors respectively are switched on, and vice versa, and wherein means are provided for biasing said first and third field effect transistors positively with respect to said positive supply terminal when the respective field effect transistor is in a conducting condition.

Preferably said last mentioned means comprises, for each of said first and third field effect transistors, means for deriving a bias from the waveform appearing across that transistor when it is conducting and preferably said last mentioned means comprises, for each of said first and third field effect transistors, means for rectifying the waveform appearing across the transistor when it is conducting to produce a bias and means for applying said bias to the gate electrode of said transistor.

In each case, preferably said last mentioned means includes means for smoothing and attenuating said bias.

Preferably said means for rectifying comprises, in each case the series combination of two diodes, one of which is a zener diode separated by a resistor, said combination being connected across the first or third (as the case may be) field effect transistor, between the source and drain electrodes thereof, and means for taking off said bias from

0038624

a point between said resistor and one of said diodes.

Preferably said polarity inverting means comprises, for each of said first and third field effect transistors, a further field effect transistor having its gate electrode connected to receive an appropriate one of said control switching waveforms, its source electrode connected to said negative supply terminal and its drain electrode connected to the gate electrode of said first or third (as the case may be) field effect transistors.

Preferably said field effect transistors are either VMOS or HEXFET devices.

As with known transistor inverter arrangements, the phase relationship between said first and second control switching waveforms may be arranged to be adjustable.

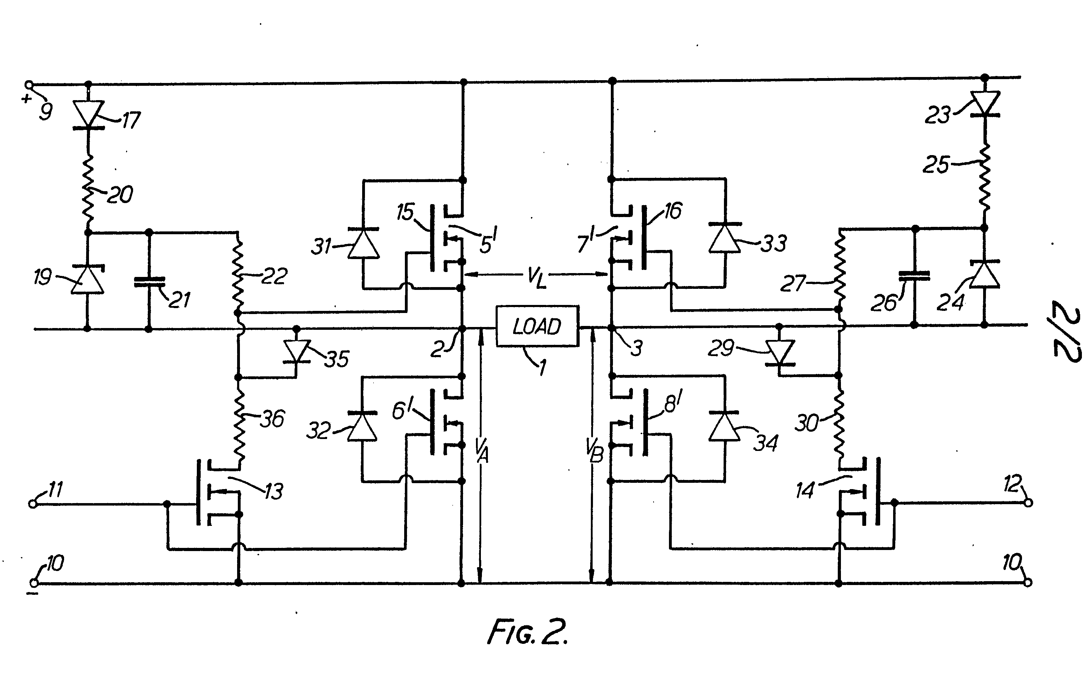

The invention is further described with reference to Figure 2 of the accompanying drawings, which illustrates one transistor inverter arrangement in accordance with the present invention. Whilst in Figure 2 like references are used for like parts in Figure 1, Figure 2 is a more detailed circuit diagram.

Referring to Figure 2, again a load 1 is shown with two connection points 2 and 3. Instead of using bi-polar transistor switches as in Figure 1, in Figure 2 corresponding switches 5', 6', 7' and 8' are field effect transistors, which, compared to bi-polar transistors, require minimal drive power and exhibit switching which for practical purpsoes, may be instantaneous.

In Figure 2, the d.c. voltage source corresponding to source 4 in Figure 1 is not shown, but the positive and negative terminals thereof are referenced 9 and 10 respectively. A control terminal 11, provided to receive a first control switching waveform, is connected directly to control FET transistor 6'. Similarly, a control terminal 12 provided to receive a second control switching waveform, is connected directly to control FET transistor 8'. Thus the switching of the transistor switches which are connected to the negative side of the supply source is taken care of.

Unlike a practical embodiment of the circuit shown in Figure 1, transformers are not employed in order to drive transistors 5' and 7', which are connected to the positive side of the supply source. Instead the transistor switches 5' and 7' are controlled from control terminals 11 and 12 each via a further FET transistor, referenced 13 in the case of switch 5' and 14 in the case of switch 7'.

In addition, means are provided for maintaining the gate electrode 15 and 16 of the FET transistors 5' and 7' respectively positive in potential, whilst those switches are closed (i.e. conductive). The last mentioned means in the case of transistor switch 5' consists of two diodes 17, 19 of which diode 19 is a zener diode, separated by a resistor 20 forming a series combination connected across the FET transistor 5' (i.e. between the drain and source electrodes). From a point between resistor 20 and diode 19, bias is derived which is connected in combination with the drive signal from further FET transistor 13 to the gate electrode 15 of transistor 5'. Capacitor 21 and resistor 22 are provided for smoothing and attenuation.

In the case of transistor switch 7' the series combination of two diodes 23, 24 of which diode 24 is a zener diode, separated by a resistor 25 is connected across the transistor 7' and bias is again derived from a point between resistor 25 and diode 24 and applied to the gate electrode 16 in similar manner. Again a capacitor 26 and a resistor 27 are provided for smoothing and attenuation.

The amount by which the base electrodes 15 and 16 are maintained above the potential of the positive terminal 9 of the supply source need not be great and in a typical case, in which the voltage of the supply source applied across terminals 9 and 10 is 100 volts, the bias voltage developed and applied to the gate 15 or 16 when the respective transistor 5' and 7' are conducting is the zener breakdown voltage of zener diodes 19 and 20. It is the provision of this bias which permits all of the devices to be controlled by two control switching waveforms (the relative phase of which may be adjustable in accordance with known practice) applied to the terminals 11 and 12, without requiring separate control, by way of transformers, of the transistors 5' and 7' which are connected to the positive terminal 10.

The correct operation of the circuit relies upon the mean d.c. voltage level across the drain and source electrodes of the FET transistors 5' and 7' remaining at half of the supply level, but this is so for many inverter arrangements.

Apart from their functions in inverting the control switching waveforms, field effect transistors 13 and 14 which may be low power transistors, also serve to ensure that transistors 5' and 7' are switched off coincidentally with the switching on of transistors 6' and 8' respectively.

Diode 35 with resistor 28 and diode 29 with resistor 30 act as clamps to limit the value of the gate bias developed for transistors 5' and 7'.

In order to provide a path for reverse current, reversely polarised diodes 31, 32, 33 and 34 are connected across the transistors 5', 6', 7' and 8' as known per se.

CLAIMS:-

1.    A transistor inverter arrangement comprising two load terminals one of which is connected via a first field effect transistor (F.E.T.) to a positive supply terminal and via a second field effect transistor to a negative supply terminal and the other of which load terminals is connected via a third field effect transistor to said positive supply terminal and via a fourth field effect transistor to said negative supply terminal and wherein there is provided means for applying a first control switching waveform to the gate electrode of said second field effect transistor and, via polarity inverting means, to the gate electrode of said first field effect transistors and means for applying a second control switching waveform to the gate electrode of said fourth field effect transistor and, via polarity inverting means, to the gate electrode of said third field effect transistor, whereby as said first and fourth field effect transistors are switched off said second and third field effect transistors respectively are switched on, and vice versa, and wherein means are provided for biasing said first and third field effect transistors positively with respect to said positive supply terminal when the respective field effect transistors is in a conducting condition.

2.    A arrangement as claimed in claim 1 and wherein said last mentioned means comprises, for each of said first and third effect transistors, means for deriving a bias from the waveform appearing across that transistor when it is conducting.

3.    An arrangement as above in claim 1 and wherein said last mentioned means comprises, for each of said first and third field effect transistors, means for rectifying the waveform appearing across the transistor when it is conducting to produce a bias and means for applying said bias to the gate electrode of said transistor.

4.    An arrangement as claimed in claim 3 and wherein in each case said last mentioned means includes means for smoothing and attenuating said bias.

5.    An arrangement as claimed in claim 3 and 4 and wherein said means for rectifying comprises, in each case, the series combination of two diodes, of which one is a zener diode, separated by a resistor, said combination being connected across the first or third (as the case may be) field effect transistor, between the source and drain electrodes thereof, and means for taking off said bias from a point between said resistor and one of said diodes.

6.    An arrangement as claimed in any of the above claims and wherein said polarity inverting means comprises, for each of said first and third field effect transistors, a further field effect transistor having its gate electrode connected to receive an appropriate one of said control switching waveforms, its source electrode connected to said negative supply terminal and its drain electrode connected to the gate electrode of said first or third (as the case may be) field effect transistors.

7.    An arrangement as claimed in any of the above claims and wherein said field effect transistors are VMOS devices.

8.    An arrangement as claimed in any of the above claims 1 to 6 and wherein said field effect transistors are HEXFET devices.

Fig. la.

Fig.lb.

FIG. 2.

**0038624**

European Patent Office

**EUROPEAN SEARCH REPORT**

Application number

EP 81 30 1134

## DOCUMENTS CONSIDERED TO BE RELEVANT

| Category | Citation of document with indication, where appropriate, of relevant passages | Relevant to claim |
|---|---|---|
| X | ELECTRONIQUE ET APPLICATIONS INDUSTRIELLES, no. 259, November 1978, Paris, FR FILLEAU, A.: "Applications des VMOS la puissance d'une nouvelle technologie", pages 19-24. <br><br> * Page 21, column 3, line 13 to page 22, column 3, line 27; figure 6 * | 1-7 |

----

**CLASSIFICATION OF THE APPLICATION (Int. Cl.³)**

H 02 M 7/537

**TECHNICAL FIELDS SEARCHED (Int. Cl.³)**

H 02 M 7/537
3/335

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-07-1981 | BERTIN |

EPO Form 1503.1  06.78